# FASCICULE DE BREVET EUROPEEN

(11) **EP 2 907 029 B1**
(45) Date de publication et mention de la délivrance du brevet: **05.12.2018**
(21) Numéro de dépôt: 13771539.7
(22) Date de dépôt: 04.10.2013
(51) Int. Cl.: G06F 11/07, G06F 11/28

(54) **CIRCUIT DE VERIFICATION DE L' EXECUTION DE LOGICIELS CRITIQUES**
SCHALTUNG ZUR PRÜFUNG DER AUSFÜHRUNG EINER KRITISCHEN SOFTWARE
CIRCUIT FOR VERIFYING THE EXECUTION OF CRITICAL SOFTWARE

(30) Priorité: 12.10.2012 FR 1259763
(43) Date de publication de la demande: 19.08.2015
(73) Titulaire: Commissariat à l'Energie Atomique et aux Energies Alternatives, 75015 Paris (FR); Silicon Mobility, 06560 Valbonne Sophia Antipolis (FR)
(72) Inventeur: DEBICKI, Olivier, F-38660 Saint Vincent De Mercuze (FR); LEMERRE, Matthieu, F-91120 Palaiseau (FR); DAVID, Vincent, F-91460 Marcoussis (FR); MINIERE, Eric, F-06130 Grasse (FR); SALLE, Bruno, F-13011 Marseille (FR)
(74) Mandataire: Lucas, Laurent Jacques
(86) Numéro de dépôt international: PCT/EP2013/070742
(87) Numéro de publication internationale: WO 2014/056805

(56) Documents cités:
- HEFFERNAN D ET AL: "Monitoring embedded software timing properties with an SoC-resident monitor", IET SOFTWARE,, vol. 3, no. 2, 9 avril 2009 (2009-04-09), pages 140-153, XP006032823, ISSN: 1751-8814, DOI: 10.1049/IET-SEN:20080040
- KRISTINA LUNDQVIST ET AL: "Non-intrusive System Level Fault-Tolerance", 7 juin 2005 (2005-06-07), RELIABLE SOFTWARE TECHNOLOGY Â ADA-EUROPE 2005; [LECTURE NOTES IN COMPUTER SCIENCE;;LNCS], SPRINGER-VERLAG, BERLIN/HEIDELBERG, PAGE(S) 156 - 166, XP019011287, ISBN: 978-3-540-26286-2 le document en entier
- Lemerre, David, Aussaguès: "An introduction to time-constrained automata", , 2010, XP002699450, Extrait de l'Internet: URL:http://arxiv.org/pdf/1010.5571v1.pdf cité dans la demande

## Description

L'invention concerne un circuit de vérification de l'exécution de logiciels critiques et s'applique notamment aux domaines des systèmes électroniques à fonctionnement critique.

Dans les domaines où la sureté de fonctionnement est nécessaire, les systèmes embarqués doivent garantir une exécution déterministe des applications mises en oeuvre dans une ou plusieurs unités d'exécution.

Dans cette description, l'expression « unité d'exécution » désigne par exemple un processeur ou CPU, acronyme venant de l'expression anglo-saxonne « Central Processing Unit ».

Différents mécanismes logiciels et matériels permettent la détection de fautes dans l'exécution d'une application. Les mécanismes matériels de redondance désignés par le mot anglais« lockstep » permettent une détection précoce des défaillances des unités d'exécution mais ne permettent pas de détecter un défaut dans la séquence d'exécution d'une application définie à partir de propriétés de haut niveau lors de la conception du système.

Par ailleurs, une solution visant à implémenter un module logiciel au sein d'une unité d'exécution visant à détecter des défaillances survenant durant l'exécution par ladite unité d'une ou plusieurs applications comporte plusieurs limitations. Tout d'abord, le module de détection capte un certain nombre de ressources de traitement et de mémoire de l'unité d'exécution. Ces ressources ne peuvent plus alors être allouées à l'exécution des applications.

Les modules de détection de failles permettent notamment de contrôler les temps d'exécution, le partage des ressources et l'ordonnancement des tâches. Ces mécanismes reposent généralement sur une tâche de supervision. Une tâche de supervision peut préempter une autre tâche lorsque celle-ci franchit une transition dans le graphe de flot de contrôle.

En outre, implémenter un module de détection et une ou plusieurs applications logicielles dans une même unité d'exécution présente l'inconvénient d'introduire une interdépendance entre ces éléments. Ainsi, si une défaillance a pour conséquence de faire fonctionner l'unité d'exécution plus lentement, les applications mais aussi le module de détection fonctionneront plus lentement. Ainsi, le temps de détection de la défaillance sera retardé. D'autre part, dans le cas d'erreurs de registre de l'unité d'exécution, de mauvaises valeurs seront lues à la fois par la ou les applications et le module de détection. Le document D1 "Monitoring embedded software timing properties with an SoC-resident monitor" IET Soft, 09.04.2009 (par Heffernan D, Shaheen S et Watterson) vérifie des tâches macroscopiques (marquées par des trames CAN) d'un système complet (ECU).

Un but de l'invention est notamment de pallier les inconvénients précités. L'invention est exposée par les revendications.

A cet effet l'invention a pour objet un circuit de vérification du déroulement temporel de l'exécution d'au moins une tâche par une unité d'exécution fonctionnant au rythme d'un signal de synchronisation et indépendante dudit circuit, l'exécution normale de la au moins une tâche étant décrite par un graphe d'exécution comprenant des noeuds représentant les états d'exécution de la tâche et des arcs de transition, le circuit de vérification comprenant un mécanisme maintenant à jour une base de temps Tc servant de référence pour la vérification temporelle, ledit signal étant représentatif du rythme du signal de synchronisation, le circuit comprenant en outre un mécanisme vérifiant que le parcours dans le graphe résultant de l'exécution d'au moins une tâche est valide, un message d'erreur étant généré si ce n'est pas le cas.

Avantageusement, le circuit selon l'invention est compatible avec une vérification « au plus près » ou bien « au plus loin » de l'exécution d'une application donnée. La granularité est dynamique, c'est-à-dire qu'il est possible de suivre des tâches qui s'apparentant à des instructions, des taches qui s'apparentent à des blocs d'instructions ou des tâches s'apparentent à des programmes.

Selon un aspect de l'invention, la base de temps Tc est mise à jour en utilisant un signal TRIG présenté en entrée du circuit (201, 600, 700).

Le graphe ou un pointeur vers le graphe est par exemple mémorisé dans au moins un registre interne lorsque la tâche à laquelle il est associé est en cours d'exécution.

Des échéances temporelles peuvent être associées aux noeuds des graphes d'exécution afin de vérifier le positionnement dans le temps des différents états d'exécution de la au moins une tâche en cours d'exécution, le circuit vérifiant le respect de ces échéances à l'aide de messages reçus indiquant qu'une transition a eu lieu, l'instant de transition étant la valeur de la base de temps Tc au moment de la réception dudit message, cet instant de transition étant comparé auxdites échéances.

Dans un mode de réalisation, le circuit comprend un mécanisme vérifiant que la durée d'exécution de l'état courant de la au moins une tâche ne dépasse pas un temps maximal Dmax lui ayant été alloué.

Le budget Dmax est par exemple calculé hors ligne lors de la conception de l'application en appliquant un algorithme de calcul du pire cas de temps d'exécution WCET.

Dans un mode de réalisation, le circuit comprend des moyens d'auto-calibration aptes à déterminer des contraintes temporelles associées pour chaque état au graphe de sa tâche et mémorisées conjointement avec le graphe.

Selon un aspect de l'invention, un mécanisme vérifie que la durée d'exécution de la au moins une tâche ne dépasse pas un temps maximal lui ayant été alloué.

Le signal TRIG est par exemple le même signal que le signal de synchronisation de l'unité d'exécution.

Une unité de stockage peut mémoriser l'état en cours de l'application exécutée par l'unité d'exécution.

L'invention a aussi pour objet un système de vérification de l'exécution d'au moins un tâche comprenant une unité d'exécution, un circuit de vérification de graphes décrit précédemment et une mémoire contenant l'ensemble des graphes d'exécution associés aux tâches que l'unité d'exécution peut exécuter.

Avantageusement, le système selon l'invention peut également comprendre plusieurs unités d'exécution, une application application donnée étant répartie sur lesdites unités.

Dans un mode de réalisation, le circuit de vérification de graphes et la mémoire sont implémentés dans un même circuit.

Selon un aspect de l'invention, les graphes sont mémorisés sous forme matricielle.

Les graphes peuvent être mémorisés sous forme d'une liste de transitions accessibles depuis un état.

Des données temporelles représentatives de l'exécution d'une tâche sont encodées dans un message venant de l'unité d'exécution et indiquant un changement d'état.

Les données temporelles d'exécution peuvent être protégées par une signature de manière à ce qu'une corruption du message puisse être détectée par le circuit de vérification de graphe.

L'invention a aussi pour objet un procédé de vérification de l'exécution d'au moins une tâche par une unité d'exécution fonctionnant au rythme d'un signal de synchronisation, comprenant :
- une étape maintenant à jour une base de temps Tc en utilisant un signal TRIG représentatif du rythme du signal de synchronisation ;
- une étape de vérification d'échéances temporelles associées aux noeuds de graphes d'exécution représentatifs d'une exécution normale de la tâche en utilisant la valeur de la base de temps Tc.

L'invention a aussi pour objet un programme informatique stocké sur un support lisible par ordinateur comprenant des moyens pour amener un circuit programmable à mettre en oeuvre le procédé décrit précédemment.

D'autres caractéristiques et avantages de l'invention apparaîtront à l'aide de la description qui suit donnée à titre illustratif et non limitatif, faite en regard des dessins annexés parmi lesquels :
- la figure 1 illustre comment une tâche d'un programme informatique peut être représentée sous la forme d'un graphe d'exécution ;
- la figure 2 présente un système comprenant un circuit de vérification de graphe et une unité d'exécution ;
- la figure 3 donne un exemple de mécanisme permettant la détection d'une transition interdite et/ou d'un problème dans le déroulement temporel de l'exécution d'une tâche représenté par un graphe d'exécution ;
- la figure 4 donne un exemple de mécanisme de détection de durée anormale d'exécution de tâche ;
- la figure 5 est un exemple de mécanisme permettant de détecter le placement temporel anormale d'une tâche parmi l'ensemble des tâches exécutées ;
- la figure 6 donne un exemple de système comprenant un circuit de vérification de graphes d'exécution et une mémoire externe ;
- la figure 7a illustre le fonctionnement du système comprenant un circuit de vérification de graphes pour valider les transitions ;
- la figure 7b illustre le fonctionnement du système comprenant un circuit de vérification de graphes d'exécution lorsque celui-ci est adapté pour effectuer une vérification temporelle de l'exécution des tâches ;
- la figure 7c illustre le fonctionnement du système comprenant un circuit de vérification de graphes lorsque celui-ci est adapté pour effectuer une vérification d'échéance inter-tâches.

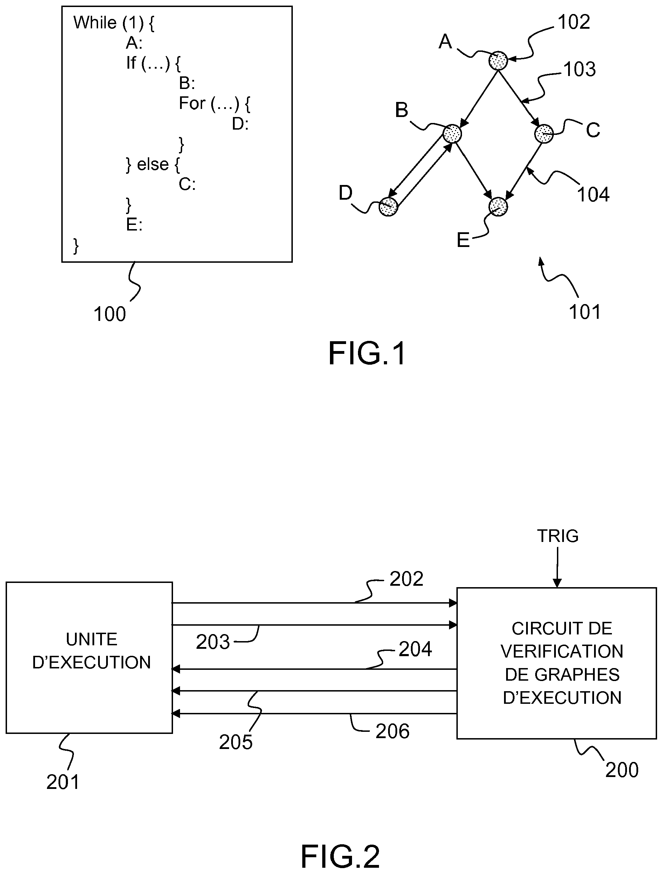

La figure 1 illustre comment une tâche d'un programme informatique peut être représentée sous la forme d'un graphe d'exécution. Un exemple simple de tâche écrite en langage C 100 est donné. Cette tâche comprend un ensemble de boucles et de conditions logiques dont la syntaxe est bien connue de l'homme du métier. Cette tâche 100 permet l'exécution d'un certain nombre de blocs d'instructions notés A, B, C, D, E. Un bloc d'instruction comprend une ou plusieurs instructions.

Il est alors possible de faire correspondre à chacun de ces blocs d'instructions un noeud 102 positionné dans un graphe d'exécution 101. Dans la suite de la description, le terme état désigne un bloc d'instruction représenté par un noeud. Des arcs orientés 103 entre les différents noeuds du graphe d'exécution sont ensuite déterminés en fonction des boucles et des conditions logiques permettant de séquencer l'exécution des blocs d'instructions. Ainsi, lors de l'exécution de la tâche, des transitions d'un noeud à l'autre définissent un parcours dans le graphe d'exécution. Par exemple, un arc orienté 104 connecte le noeud associé au bloc d'instruction C au noeud associé au bloc d'instruction E. La dernière instruction du bloc C sera suivie de la première instruction du bloc E.

Une défaillance d'exécution peut provoquer une transition interdite dans le parcours du graphe d'exécution, c'est-à-dire une transition pour laquelle aucun arc orienté n'a été défini. Cette défaillance peut être provoquée par un comportement non déterministe résultant d'une erreur de conception, d'une erreur d'implémentation logicielle ou à une défaillance matérielle.

La conception à partir d'automate de contraintes temporelles permet d'isoler temporellement les tâches du système, comme cela est illustré dans l'article de M. Lemerre, V. David, C. Aussaguès et G. Vidal-Naquet intitulé An introduction to time-constrained automata, EPTCS : Proceedings of the 3rd Interaction and Concurrency Expérience Workshop (ICE'10), volume 38, pages 83-98, Juin 2010. Plusieurs langages de haut niveau tel le langage ψC permettent de rajouter ces contraintes temporelles au graphe d'exécution.

La vérification temporelle du parcours du graphe répond notamment à deux besoins rencontrés dans le cadre des systèmes critiques.

Un premier besoin est de borner la durée d'exécution d'un bloc de code. La détection du dépassement d'une durée allouée pour le passage d'un noeud à un autre permet d'identifier un bloc de code monopolisant des ressources de l'unité d'exécution allant au-delà de ce qui lui a été alloué lors de la conception du système.

Un deuxième besoin est de vérifier les instants de début et de fin d'exécution d'une tâche. Cela concerne les applications cadencées par le temps. A chaque transition correspond une échéance minimale et une échéance maximale déterminées lors de la conception du système. A chaque franchissement d'une transition, la date courante doit être comparée aux échéances liées à ladite transition.

Il est à noter qu'en cas de défaillance dans l'ordonnancement des tâches, l'échéance d'une tâche peut être dépassée sans que celle-ci ait été activée. Le système continue alors de fonctionner sans avoir détecté de défaillance. Afin d'écarter ce risque, il est possible de mettre en oeuvre un mécanisme de vérification d'échéances inter-tâches. Un tel mécanisme permet alors de vérifier que toutes les échéances définies pour l'application sont continuellement prises en compte quel que soit l'état des tâches.

La figure 2 présente un système comprenant un circuit de vérification de graphe et une unité d'exécution. Le circuit de vérification de graphe et l'unité d'exécution sont deux circuits distincts. L'unité d'exécution est chargée d'exécuter des tâches pouvant être décrites par des graphes d'exécution, lesdites tâches étant par exemple associées à une application donnée. Cette unité d'exécution est par exemple un circuit synchrone, c'est-à-dire que son fonctionnement est rythmé par un signal de synchronisation appelé aussi signal d'horloge.

Avantageusement, le circuit de vérification permet de contrôler plusieurs graphes.

Le circuit de vérification de graphes d'exécution 200 comprend un mécanisme permettant de valider les transitions d'un noeud de graphe d'exécution à l'autre. De manière complémentaire, ce circuit de vérification peut également contrôler le déroulement temporel de l'exécution. Pour cela, le circuit de vérification de graphes 200 entretient une référence temporelle Tc à l'aide d'un signal d'entrée représentatif du signal de synchronisation utilisé par l'unité d'exécution. Cette référence temporelle permet ainsi de connaître précisément le rythme auquel devrait normalement s'exécuter les tâches exécutées par le circuit 201.

Le circuit de vérification de graphes 200 peut être un circuit synchrone ou asynchrone, l'important étant qu'il puisse maintenir une référence temporel représentative du fonctionnement synchrone de l'unité d'exécution. Si le circuit de vérification de graphes 200 est un circuit synchrone, il peut utiliser le même signal de synchronisation que l'unité d'exécution ou un second signal de synchronisation lui étant propre de manière à renforcer l'indépendance de fonctionnement entre l'unité d'exécution et le circuit de vérification de graphes 200.

Sur la figure 2 est également représenté un exemple d'interface entre le circuit de vérification de graphes d'exécution 200 et l'unité d'exécution 201. Cet exemple d'interface comprend un ensemble de connexions permettant à ces deux équipements d'échanger des messages prédéfinis.

Un premier message 202 peut être envoyé par l'unité d'exécution 201 au circuit de vérification de graphes d'exécution 200 de manière à indiquer quelle est la tâche en cours d'exécution.

Un second type de message 203 est envoyé par l'unité d'exécution 201 au circuit de vérification de graphes d'exécution 200 de manière à indiquer qu'un changement d'état, c'est-à-dire le passage d'un noeud du graphe à un autre, est intervenu durant l'exécution de la tâche courante.

En retour, le circuit de vérification de graphe 200 peut générer différents messages d'erreurs résultant de l'analyse de l'exécution de la tâche au regard de son graphe d'exécution.

Un premier message d'erreur 204 est généré si le changement d'état ne correspond pas à un parcours valide dans le graphe d'exécution. Un parcours valide dans le graphe correspond à une succession d'états représentative d'une exécution normale de la tâche.

Un second message d'erreur 205 est généré si la durée d'exécution maximale dans l'état courant est dépassée.

Un troisième message d'erreur 206 est généré lorsque les échéances de transition ne sont pas respectées.

Un signal TRIG représentatif de la base temporelle utilisée par l'unité d'exécution est utilisé en entrée par le circuit de vérification de graphe 200. Le signal TRIG est un signal d'horloge indépendant ou non de l'unité d'exécution. Si les deux circuits ont un fonctionnement indépendant, une défaillance de l'unité d'exécution n'affecte pas la fiabilité de la détection mise en oeuvre par le circuit de vérification de graphes d'exécution.

Afin de vérifier que l'exécution des tâches de l'application courante se déroule correctement, il est possible d'associer à chaque état du graphe d'exécution, c'est-à-dire à chaque noeud, des paramètres temporels comme par exemple :
- la date d'entrée anticipée Te dans un état donné. Te est par exemple choisie comme le moment avant lequel l'entrée dans un noeud du graphe résulterait d'une défaillance. Te peut par exemple être exprimée relativement par rapport à la date d'entrée du noeud précédent ;
- la durée d'exécution maximale Dmax dans cet état. Dmax correspond par exemple au pire temps d'exécution évalué lors de la conception du système ;
- La date la plus tardive de sortie Ts de l'état. Ts est par exemple choisie comme le moment après lequel l'entrée dans un noeud du graphe résulterait d'une défaillance. Ts peut par exemple être exprimé relativement par rapport à la date d'entrée Te du noeud courant ;
- La date courante Tc déduite de l'observation du signal TRIG est comparée aux dates de sortie Ts de l'état courant et d'entrée Te dans l'état suivant.

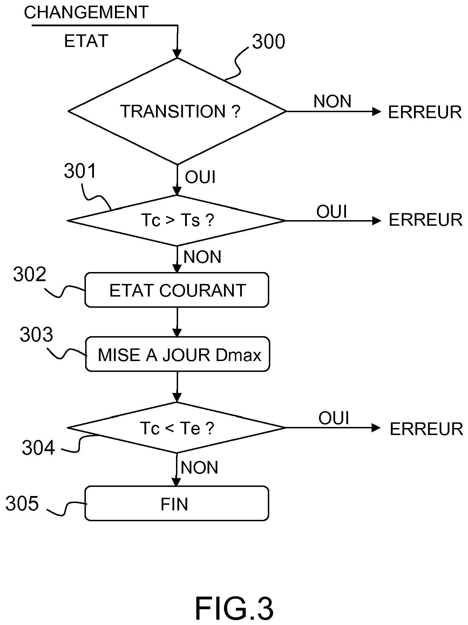

La figure 3 donne un exemple de mécanisme permettant la détection d'une transition interdite et/ou d'un problème dans le déroulement temporel de l'exécution d'une tâche représenté par un graphe d'exécution.

Lorsqu'un changement d'état est détecté, il est vérifié 300 que la transition de l'état précédent vers le nouvel état existe. A ce stade, l'état précédent est encore considéré comme l'état courant. Pour que la transition d'état soit valide, il faut qu'un arc orienté entre deux noeuds représentatif de ce changement d'état existe. Si ce n'est pas le cas, un message d'erreur indiquant un défaut de transition est généré.

Si la transition est valide, il est ensuite vérifié 301 que la date courante Tc de sortie de l'état précédent est supérieure à la date Ts mémorisée. Si c'est le cas, un message d'erreur est généré.

Au contraire, si aucun message d'erreur n'a été généré à ce stade, le nouvel état est mémorisé comme étant l'état courant 302.

Le budget d'exécution est ensuite initialisé 303 en prenant une valeur Dmax mémorisé pour ce nouvel état courant.

Il est alors vérifié 304 si la date courante Tc d'entrée dans le nouvel état courant est inférieure à Te. Si c'est le cas, un message d'erreur est généré. Sinon, ce mécanisme de vérification se termine 305.

Dans cet exemple, à chaque changement d'état, la date courante Tc déduite de l'observation du signal TRIG est comparée aux dates de sortie Ts de l'état courant et d'entrée Te dans l'état suivant.

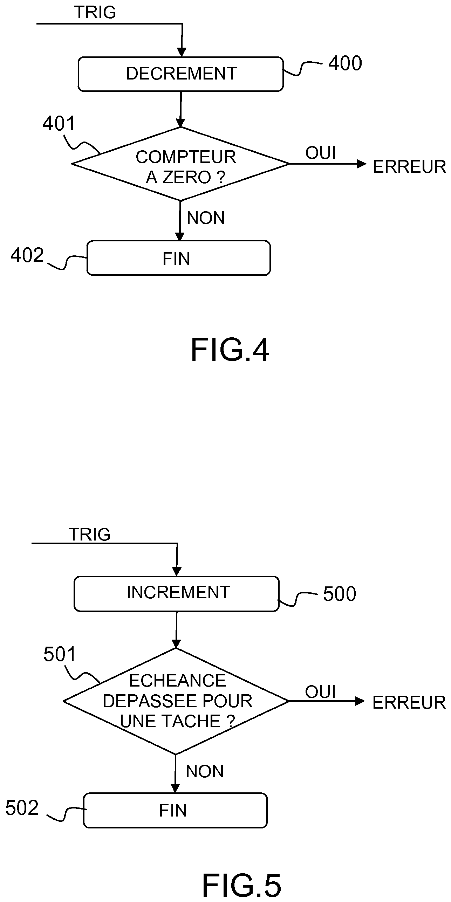

La figure 4 donne un exemple de mécanisme de détection de durée anormale d'exécution de tâche.

Comme indiqué précédemment, un budget d'exécution Dmax peut être alloué pour chaque état d'une tâche. Si le temps d'exécution de l'état courant dépasse le budget lui ayant été alloué, une erreur est générée. Ainsi, ce mécanisme prend comme entrée le signal TRIG représentatif de la base temporelle utilisée par l'unité d'exécution. Ce signal est alors utilisé pour décrémenter 400 un compteur temporel initialisé 303 lors du lancement de la tâche. Il est ensuite vérifié 401 si ce compteur est à zéro. Si c'est le cas, le budget d'exécution alloué à cet état est dépassé et une erreur est générée. Sinon, le mécanisme se termine 402.

Un mécanisme similaire peut également être mis en oeuvre pour vérifier qu'un budget temporel alloué à l'exécution d'une tâche dans son ensemble n'a pas été dépassé.

La figure 5 est un exemple de mécanisme permettant de détecter le placement temporel anormal d'une tâche parmi l'ensemble des tâches exécutées.

Le signal TRIG est utilisé pour incrémenter 500 un compteur temporel indiquant quelle est la date courante Tc. Après chaque mise à jour du compteur, la date courante Tc est comparée 501 à la date de sortie d'état Ts pour toutes les tâches actives. Si la date est dépassée pour une tâche, cela signifie qu'elle a été préemptée trop longtemps et une erreur est générée. Cela peut être la conséquence d'un ordonnancement de tâche défectueux. Sinon, le mécanisme se termine 502.

Les mécanismes des figures 3, 4 et 5 peuvent être avantageusement mis en oeuvre par le circuit de vérification de graphes d'exécution.

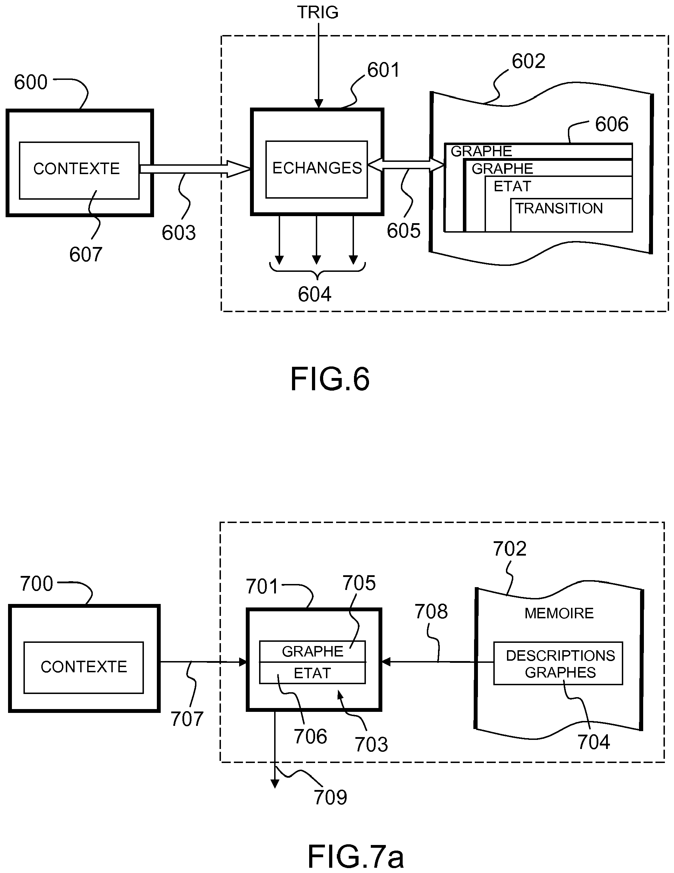

La figure 6 donne un exemple de système comprenant un circuit de vérification de graphes d'exécution et une mémoire externe.

Le système comprend une unité d'exécution 600, un circuit de vérification de graphes 601 et une mémoire 602. Le circuit de vérification de graphes 601 est un périphérique matériel utilisant des données d'entrée en provenance de l'unité d'exécution 600. Ces données d'entrée 603 ont pour fonction d'indiquer au circuit de vérification de graphes 601 un changement de contexte 607 des tâches comme le basculement d'une tâche à une autre ou un changement d'état lors de l'exécution d'une tâche donnée. Tout ou partie des messages provenant de l'unité d'exécution 600 et à destination du circuit de vérification de graphe 601 peut être associé à un tel identifiant en vue d'un contrôle d'exécution multitâches.

Un signal TRIG représentatif de la base temporelle utilisée par l'unité d'exécution est également utilisé comme donnée d'entrée.

Le circuit de vérification de graphes 601 génère au moins un signal asynchrone d'erreur 604 lorsqu'un défaut d'exécution est détecté.

Le circuit de vérification de graphes 601 comprend des moyens pour accéder de manière autonome 605 à un circuit de mémoire 602 dans lequel sont stockés des descriptions 606 des graphes d'exécution. Le circuit 601 peut ainsi accéder à plusieurs descriptions de graphes mémorisées.

Dans un mode de réalisation préféré, un graphe d'exécution est associé à une tâche donnée. Il y a donc dans cet exemple un graphe d'exécution par tâche.

Un graphe d'exécution est mémorisé sous la forme d'une description de noeuds et des transitions possibles à partir de chaque état. La description du graphe doit avoir été initialisée en mémoire avant le démarrage de la tâche.

Les échéances critiques des tâches du système peuvent être enregistrées dans la mémoire interne du circuit de vérification de graphes 601. Le circuit de vérification de graphes 601 peut ainsi vérifier l'échéance d'une tâche qui n'est pas active au niveau de l'unité d'exécution.

Dans un autre mode de réalisation, le circuit de vérification de graphes 601 et la mémoire 602 sont implémentés sur deux circuits distincts.

Dans un mode de réalisation, les mémoires 602 et 702 peuvent être associées uniquement au circuit de vérification de graphe et d'échéance.

Dans un autre mode de réalisation, ces mémoires peuvent être partagées avec d'autres éléments du système comme d'autres unités d'exécution. Lors du fonctionnement du système, ces mémoires ne sont accédées qu'en lecture seule. Elles doivent être initialisées avant l'activation des mécanismes de vérification de graphe ou d'échéance. Dans un mode de réalisation ces mémoires peuvent être non volatiles. Dans un mode de réalisation, l'unité d'exécution, le circuit de vérification de graphe et d'échéance et les mémoires associées sont implémentés sur le même circuit. De manière alternative, ils peuvent être implémentés sur des circuits distincts.

Si d'autres circuits peuvent accéder à la mémoire 602, alors les informations relatives aux graphes peuvent être sécurisées pour le stockage et le transport par des signatures de cryptographie, ou par le fait que la mémoire soit en lecture seule.

Dans un mode de réalisation alternatif, le circuit de vérification de graphes 601 et la mémoire 602 sont implémentés dans un même circuit.

Dans un premier exemple, les graphes sont mémorisés sous forme matricielle. Dans un deuxième exemple, les graphes sont mémorisés sous forme d'une liste de transitions accessibles depuis un état.

La figure 7a illustre le fonctionnement du système comprenant un circuit de vérification de graphes pour valider les transitions.

Comme précédemment, le système comprend une unité d'exécution 700, un circuit de vérification de graphes d'exécution 701 et une mémoire 702.

Le circuit de vérification de graphe 701 dispose d'une unité de stockage 703 permettant de mémoriser l'état en cours de l'application exécutée par l'unité d'exécution 700.

L'unité de stockage peut être mise à jour lorsqu'une transition vers un nouvel état a été validée, et lorsque la tâche en cours est préemptée ou interrompue.

Dans un mode de réalisation, cette unité de stockage est constituée de deux registres 705, 706 accessibles depuis l'unité d'exécution. Un premier registre 705 pointe vers la description mémorisée 704 du graphe de la tâche courante. Un second registre 706 indexe l'état courant.

Lors de tout changement d'état de la tâche courante, l'unité d'exécution 700 notifie 707 au circuit de vérification de graphe 701 le nouvel état par l'écriture d'un identifiant dans un registre dédié. Le message 707 peut être associé à un identifiant permettant de savoir à quelle tâche ce nouvel état est associé. Cela est particulièrement utile lorsque le circuit de vérification de graphe 701 contrôle plusieurs tâches associées respectivement à plusieurs graphes. Plus généralement, tout ou partie des messages provenant de l'unité d'exécution 700 et à destination du circuit de vérification de graphe 701 peut être associé à un tel identifiant en vue d'un contrôle d'exécution multitâches. Cette remarque est applicable à l'ensemble des modes de réalisation de l'invention présentés dans cette description.

Le circuit de vérification de graphe 701 accède ensuite au voisinage de l'état courant en parcourant 708 la description du graphe courant stockée en mémoire 702. Si le nouvel état ne fait pas partie du voisinage, le circuit de vérification de graphe 701 génère un message d'erreur 709 indiquant un défaut de transition.

Lorsque la tâche en cours est démarrée, préemptée ou interrompue, l'unité d'exécution notifie le circuit de vérification de graphe 701. L'unité de stockage de l'état courant est mise à jour.

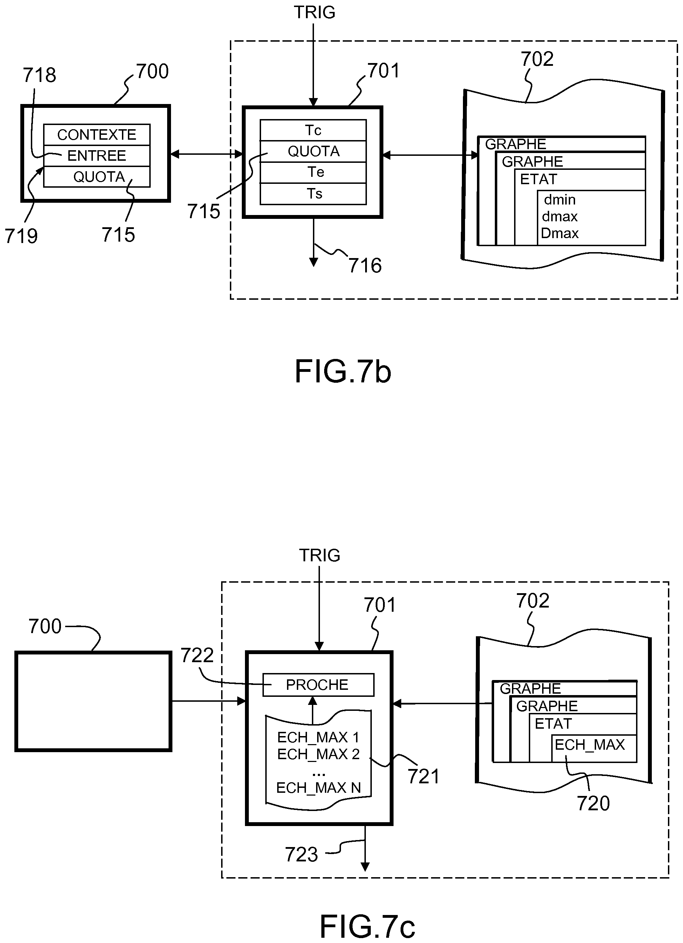

La figure 7b illustre le fonctionnement du système comprenant un circuit de vérification de graphes d'exécution lorsque celui-ci est adapté pour effectuer une vérification temporelle de l'exécution des tâches.

Selon un aspect de l'invention, un budget de temps d'exécution est alloué à un état. Ce budget est généralement calculé hors ligne lors de la conception de l'application. C'est par exemple le résultat d'un algorithme de calcul du pire cas de temps d'exécution WCET, acronyme venant de l'expression anglo-saxonne « Worst-Case Execution Time ».

Alternativement, ce budget peut être aussi déterminé de manière empirique par le circuit de vérification de graphe 701. Pour cela le circuit de vérification de graphe 701 comporte un mode ayant des moyens d'auto-calibration lui permettant de mesurer les contraintes temporelles. Ces contraintes temporelles sont des données dmin, dmax, DMax pouvant être associées pour chaque état au graphe de sa tâche et mémorisées 702 conjointement avec le graphe.

Dans le mode d'auto-calibration, l'unité d'exécution 700 parcourt plusieurs fois tous les états du graphe en exécutant une application identique ou représentative de l'application finale. Lors du déroulement du graphe, l'unité de vérification 701 met à jour dans la mémoire 702 les contraintes représentatives de chaque état du graphe dmin, et/ou dmax, et/ou DMax au fil des transitions d'état en état. Ladite mise à jour des contraintes dmin, et/ou dmax, et/ou DMax pour chaque état s'effectue selon une logique du choix du pire cas: ainsi, lorsque l'unité d'exécution parcoure plusieurs fois le graphe, tous les états sont franchis plusieurs fois, et à chaque franchissement d'état, l'unité de vérification de graphe 701 compare les contraintes mesurées dmin_meas, et/ou dmax_meas, et/ou DMax_meas avec les contraintes enregistrées en mémoires dmin, et/ou dmax, et/ou DMax, relative à l'état en cours, et applique la logique suivante :
- dmin_meas remplace dmin en mémoire si dmin_meas<dmin ;
- dmax_meas remplace dmax en mémoire si dmax_meas>dmax ;
- DMax_meas remplace DMax en mémoire si DMax_meas>DMax.

Lors d'un changement d'état, le circuit de vérification de graphe 701 charge dans un registre interne la durée maximale d'exécution Dmax du nouvel état. Ce budget 715 est décrémenté à chaque changement de la date système, ce changement étant détecté en surveillant le signal TRIG. Lorsque ce budget est consommé, le circuit de vérification de graphe 701 génère un message d'erreur 716.

Lorsque la tâche courante est préemptée ou interrompue, l'application 719 sauvegarde la valeur du registre de budget d'exécution 715 dans le contexte de la tâche courante et informe le circuit de vérification de graphe 701 d'arrêter la décrémentation du budget. Quand la tâche redémarre, l'application doit charger le registre de budget d'exécution du circuit de vérification de graphe 701 à partir de la valeur sauvegardée dans le contexte de la tâche et reprendre la décrémentation du quota.

A noter qu'il est possible de mettre en oeuvre deux alternatives. Dans l'une, la valeur du registre de budget d'exécution est conservée dans le circuit de vérification de graphe. Dans l'autre, le budget est conservé par l'unité d'exécution comme ici. Les valeurs stockées dans le contexte de la tâche gérée par l'unité d'exécution ou dans les mémoires 602, 702 peuvent être protégées par une signature vérifiée par circuit de vérification de graphe 601. L'ajout de cette signature permet au circuit de vérification de graphe de s'assurer que l'unité d'exécution n'a pas modifié le registre. Une transition dans un graphe peut être franchie au plus tôt et au plus tard à partir de dates Te et Ts définies par rapport à la date d'entrée 718 dans l'état de départ. Ces dates sont déterminées par exemple à partir de décalages temporels dmin et dmax calculés lors de la conception du système pour chaque transition ou pendant l'auto calibration des paramètres temporels. Ils peuvent être stockés dans la description du graphe en mémoire 702. Ces informations peuvent être stockées par noeud ou par transition.

Si au moment de la transition la date courante Tc n'est pas dans l'intervalle spécifié, c'est-à-dire comprise entre Te et Ts, le circuit de vérification de graphe 701 génère un message d'erreur temporelle 716.

A noter qu'il est aussi possible de décomposer les transitions en au moins deux parties, par exemple en début et en fin de transition. Dans ce cas, chacune des parties doit être entre Te et Ts. Cela permet de vérifier que toute la transition s'est déroulée dans l'intervalle souhaité, plutôt que seulement le début ou seulement la fin.

Selon un aspect de l'invention, la violation de budget d'exécution et une transition arrivant de manière trop anticipée ou trop tardive sont autant d'événements pouvant être différenciés en générant par exemple des messages d'erreurs distincts. Cela a l'avantage de permettre une analyse fine des défaillances du système.

Si Te et Ts stockés dans la description du graphe en mémoire sont exprimés par rapport à la date d'entrée du noeud précédent, la tâche courante est préemptée ou interrompue, l'application 719 sauvegarde 718 la date d'entrée dans l'état courant dans le contexte de la tâche en mémoire. Quand la tâche redémarre, l'application doit charger le registre contenant la date du début d'exécution de l'état courant à partir de la valeur sauvegardée dans le contexte de la tâche. Les registres Te et Ts de l'unité 715 sont alors calculés à partir de la date de début d'exécution et des valeurs relatives stockées dans le graphe d'exécution.
A noter qu'il est possible de mettre en oeuvre deux alternatives. Dans l'une, c'est l'application qui stocke ou restaure l'état pendant la préemption. Dans l'autre toutes les informations sont conservées dans le circuit de vérification de graphe.

Il est possible d'encoder les données temporelles d'exécution dans le message venant de l'unité d'exécution et indiquant un changement d'état. Pour plus de sécurité, celles-ci peuvent être protégées par une signature. Dans ce cas et de manière avantageuse, une corruption du message peut être détectée par le circuit de vérification de graphe 701. L'intérêt de ce mécanisme est de réduire l'espace de stockage dédié à ce circuit.

La figure 7c illustre le fonctionnement du système comprenant un circuit de vérification de graphes lorsque celui-ci est adapté pour effectuer une vérification d'échéance inter-tâches.

Lors de la conception du système, il est possible de définir pour chaque état d'une tâche une durée maximum d'exécution ainsi que des échéances maximales pour les transitions acceptées depuis cet état.

Cependant, si la tâche n'est plus exécutée, les échéances peuvent être dépassées sans que le système puisse le détecter. Cette situation peut être la conséquence d'une défaillance de l'algorithme d'ordonnancement.

Pour chaque état du graphe d'exécution, une échéance 720 peut être définie. Cette échéance peut par exemple correspondre au temps maximal nécessaire pour attendre l'état suivant. Tout d'abord, une échéance de transition est définie pour chaque transition possible à partir d'un état donnée d'un graphe d'exécution. L'échéance maximale ECH_MAX pour une tâche donnée correspond par exemple au maximum des échéances de transition mémorisées pour l'état courant.

A chaque modification de la date système, le circuit de vérification de graphes vérifie que la date système est antérieure à chacune des échéances courantes des tâches actives. En cas de violation, le circuit de vérification de graphes 701 génère un message d'erreur 723.

Pour optimiser cette série de comparaisons, le circuit de vérification de graphes 701 peut mémoriser les échéances maximales 721 pour chaque tâche active et détermine l'échéance la plus proche 722. A chaque modification de la date système, le circuit de vérification de graphes 701 vérifie que l'échéance la plus proche 722 n'a pas été franchie. En cas de violation, le circuit de vérification de graphes 701 génère un message d'erreur 723.

A chaque changement d'état, l'échéance maximale de la tâche est réévaluée à partir des transitions accessibles depuis le nouvel état. L'échéance la plus proche 722 est mise à jour si cette nouvelle échéance est antérieure. Elle est également réévaluée si l'échéance la plus proche 722 appartenait à la tâche en cours. Dans ce cas la liste des échéances maximales pour toutes les tâches est parcourue pour déterminer la plus proche.

Alternativement, les échéances maximales peuvent également être organisées en liste ou tas triés, la comparaison se faisant alors avec l'échéance en tête de liste.

Il est à noter que le circuit de vérification de graphes permet le contrôle de plusieurs graphes de manière concurrente.

## Revendications

1. Circuit (200, 601, 701) de vérification du déroulement temporel de l'exécution d'au moins une tâche par une unité d'exécution (201, 600, 700) fonctionnant au rythme d'un signal de synchronisation et indépendante dudit circuit, l'exécution normale de la au moins une tâche étant décrite par un graphe d'exécution (101) comprenant des noeuds (102) représentant les états d'exécution de la tâche et des arcs de transition (103),
le circuit de vérification comprenant un mécanisme maintenant à jour une base de temps Tc servant de référence pour la vérification temporelle, cette base Tc étant mise à jour en utilisant un signal TRIG ledit signal TRIG étant représentatif du rythme du signal de synchronisation, le circuit comprenant en outre un mécanisme vérifiant (300) que le parcours dans le graphe résultant de l'exécution d'au moins une tâche est valide, un message d'erreur étant généré si ce n'est pas le cas; et dans lequel des échéances temporelles (Te, Ts) sont associées aux noeuds des graphes d'exécution afin de vérifier le positionnement dans le temps des différents états d'exécution de la au moins une tâche en cours d'exécution, le circuit vérifiant le respect de ces échéances à l'aide de messages reçus (203) indiquant qu'une transition a eu lieu, l'instant de transition étant la valeur de la base de temps Tc au moment de la réception dudit message, cet instant de transition étant comparé auxdites échéances.

2. Circuit selon la revendication 1 dans lequel le signal TRIG est présenté en entrée du circuit (200, 601, 701). 700).

3. Circuit selon la revendication 1 dans lequel le graphe (101) ou un pointeur vers le graphe est mémorisé dans au moins un registre interne (705) lorsque la tâche à laquelle il est associé est en cours d'exécution.

4. Circuit selon l'une des revendications précédentes dans lequel un mécanisme (303) vérifie que la durée d'exécution de l'état courant de la au moins une tâche ne dépasse pas un temps maximal Dmax lui ayant été alloué.

5. Circuit selon la revendication 4 dans lequel le budget Dmax est calculé hors ligne lors de la conception de l'application en appliquant un algorithme de calcul du pire cas de temps d'exécution WCET.

6. Circuit selon la revendication 4 comprenant des moyens d'auto-calibration aptes à déterminer des contraintes temporelles associées pour chaque état au graphe de sa tâche et mémorisées (702) conjointement avec le graphe.

7. Circuit selon l'une des revendications précédentes dans lequel un mécanisme (303) vérifie que la durée d'exécution de la au moins une tâche ne dépasse pas un temps maximal lui ayant été alloué.

8. Circuit selon l'une des revendications précédentes dans lequel le signal TRIG est le même signal que le signal de synchronisation de l'unité d'exécution.

9. Circuit selon l'une des revendications précédentes dans lequel une unité de stockage (703) mémorise l'état en cours de l'application exécutée par l'unité d'exécution (700).

10. Système de vérification de l'exécution d'au moins un tâche comprenant l'unité d'exécution (201, 600, 700) et le circuit de vérification du déroulement temporel de l'exécution d'au moins une tâche par l' unité d'exécution (201, 600, 700) selon l'une des revendications précédentes et une mémoire (602, 702) contenant l'ensemble des graphes d'exécution associés aux tâches que l'unité d'exécution (201, 600, 700) peut exécuter.

11. Système selon la revendication 10 dans lequel le circuit de vérification du déroulement temporel de l'exécution d'au moins une tâche par l'unité d'exécution (201, 600, 700) et la mémoire (602, 702) sont implémentés dans un même circuit.

12. Système selon l'une des revendications 10 à 11 dans lequel les graphes sont mémorisés sous forme matricielle.

13. Système selon l'une des revendications 10 à 12 dans lequel les graphes sont mémorisés sous forme d'une liste de transitions accessibles depuis un état.

14. Système selon l'une des revendications 10 à 13 dans lequel des données temporelles représentatives de l'exécution d'une tâche sont encodées dans un message (707) venant de l'unité d'exécution (700) et indiquant un changement d'état.

15. Système selon la revendication 13 dans lequel les données temporelles d'exécution sont protégées par une signature de manière à ce qu'une corruption du message puisse être détectée par le circuit de vérification de graphe (701).

16. Procédé de vérification de l'exécution d'au moins une tâche par une unité d'exécution (201, 600, 700) fonctionnant au rythme d'un signal de synchronisation, comprenant :
- une étape maintenant à jour une base de temps Tc en utilisant un signal TRIG représentatif du rythme du signal de synchronisation ;
- une étape de vérification (300) que le parcours dans le graphe résultant de l'exécution d'au moins une tâche est valide, un message d'erreur étant généré si ce n'est pas le cas; et
- une étape de vérification d'échéances (Te, Ts) temporelles associées aux noeuds de graphes d'exécution représentatifs d'une exécution normale de la tâche en utilisant la valeur de la base de temps Tc, afin de vérifier le positionnement dans le temps des différents états d'exécution de la au moins une tâche en cours d'exécution, en vérifiant le respect de ces échéances à l'aide de messages reçus (203) indiquant qu'une transition a eu lieu, l'instant de transition étant la valeur de la base de temps Tc au moment de la réception dudit message, cet instant de transition étant comparé auxdites échéances.

17. Programme informatique stocké sur un support lisible par ordinateur comprenant des moyens pour amener un circuit programmable à mettre en oeuvre le procédé selon la revendication 16.

## Patentansprüche

1. Schaltung (200, 601, 701) zum Verifizieren des zeitlichen Ablaufs der Ausführung von wenigstens einer Aufgabe durch eine Ausführungseinheit (201, 600, 700), die im Takt eines Synchronisationssignals und unabhängig von der Schaltung arbeitet, wobei die normale Ausführung der wenigstens einen Aufgabe durch eine Ausführungsgrafik (101) beschrieben wird, die Knoten (102) umfasst, die Ausführungszustände der Aufgabe und Übergangsbögen (103) repräsentiert,
wobei die Verifizierungsschaltung einen Mechanismus umfasst, der eine Zeitbasis Tc auf dem neuesten Stand hält, die als Referenz für die zeitliche Verifikation dient, wobei diese Basis Tc mittels eines Signals TRIG auf dem neuesten Stand gehalten wird, wobei das Signal TRIG den Takt des Synchronisationssignals repräsentiert, wobei die Schaltung ferner einen Mechanismus (300) umfasst, der verifiziert, dass der aus der Ausführung von wenigstens einer Aufgabe resultierende Verlauf der Grafik gültig ist, wobei eine Fehlermeldung erzeugt wird, wenn sie es nicht ist; und wobei Zeitrahmen (Te, Ts) mit den Knoten der Ausführungsgrafiken assoziiert sind, um die zeitliche Positionierung verschiedener Ausführungszustände der wenigstens einen Aufgabe im Laufe der Ausführung zu verifizieren, wobei die Schaltung die Einhaltung dieser Zeitrahmen anhand von empfangenen Meldungen (203) überprüft, die anzeigen, dass ein Übergang stattgefunden hat, wobei der Zeitpunkt des Übergangs der Wert der Zeitbasis Tc im Moment des Empfangs der Meldung ist, wobei dieser Übergangszeitpunkt mit den Zeitrahmen verglichen wird.

2. Schaltung nach Anspruch 1, wobei das Signal TRIG am Eingang der Schaltung (200, 601, 701) präsentiert wird.

3. Schaltung nach Anspruch 1, wobei die Grafik (101) oder ein Zeiger auf die Grafik in wenigstens einem internen Register (705) gespeichert wird, wenn die Aufgabe, mit der sie assoziiert ist, gerade ausgeführt wird.

4. Schaltung nach einem der vorherigen Ansprüche, wobei ein Mechanismus (303) verifiziert, dass die Ausführungsdauer des laufenden Zustands der wenigstens einen Aufgabe eine ihr zugewiesene Höchstzeit Dmax nicht überschreitet.

5. Schaltung nach Anspruch 4, wobei das Budget Dmax offline während der Konzeption der Applikation unter Anwendung eines Rechenalgorithmus des ungünstigsten Falls der Ausführungszeit WCET berechnet wird.

6. Schaltung nach Anspruch 4, die Autokalibrationsmittel umfasst, die zeitliche Beschränkungen bestimmen können, die für jeden Zustand mit der Grafik ihrer Aufgabe assoziiert sind und gemeinsam mit der Grafik gespeichert (702) werden.

7. Schaltung nach einem der vorherigen Ansprüche, wobei ein Mechanismus (303) verifiziert, dass die Ausführungsdauer der wenigstens einen Aufgabe eine ihr zugewiesene Höchstzeit nicht überschreitet.

8. Schaltung nach einem der vorherigen Ansprüche, wobei das Signal TRIG dasselbe Signal ist wie das Synchronisationssignal der Ausführungseinheit.

9. Schaltung nach einem der vorherigen Ansprüche, wobei eine Speichereinheit (703) den Zustand im Laufe der von der Ausführungseinheit (700) ausgeführten Applikation speichert.

10. System zum Verifizieren der Ausführung von wenigstens einer Aufgabe, umfassend die Ausführungseinheit (201, 600, 700) und die Verifikationsschaltung des zeitlichen Ablaufs der Ausführung von wenigstens einer Aufgabe durch die Ausführungseinheit (201, 600, 700) nach einem der vorherigen Ansprüche und einen Speicher (602, 702), der den Satz von mit den Aufgaben assoziierten Ausführungsgrafiken enthält, die die Ausführungseinheit (201, 600, 700) ausführen kann.

11. System nach Anspruch 10, wobei die Schaltung zum Verifizieren des zeitlichen Ablaufs der Ausführung von wenigstens einer Aufgabe durch die Ausführungseinheit (201, 600, 700) und der Speicher (602, 702) in einer selben Schaltung implementiert sind.

12. System nach einem der Ansprüche 10 bis 11, wobei die Grafiken in einer Matrixform gespeichert sind.

13. System nach einem der Ansprüche 10 bis 12, wobei die Grafiken in Form einer Liste von von einem Zustand zugänglichen Übergängen gespeichert sind.

14. System nach einem der Ansprüche 10 bis 13, wobei die die Ausführung einer Aufgabe repräsentierenden zeitlichen Daten in einer Meldung (707) codiert sind, die von der Ausführungseinheit (700) kommt und eine Zustandsänderung anzeigt.

15. System nach Anspruch 13, wobei die zeitlichen Ausführungsdaten durch eine Signatur auf eine solche Weise geschützt werden, dass eine Verfälschung der Meldung durch die Grafikverifikationsschaltung (701) erkannt werden kann.

16. Verfahren zum Verifizieren der Ausführung von wenigstens einer Aufgabe durch eine Ausführungseinheit (201, 600, 700), die im Rhythmus eines Synchronisationssignals arbeitet, das Folgendes beinhaltet:
- einen Schritt, der eine Zeitbasis Tc anhand eines Signals TRIG auf dem neuesten Stand hält, das den Rhythmus des Synchronisationssignals repräsentiert;
- einen Schritt (300) des Verifizierens, dass der von der Ausführung von wenigstens einer Aufgabe resultierende Verlauf in der Grafik gültig ist, wobei eine Fehlermeldung erzeugt wird, wenn dies nicht der Fall ist; und
- einen Schritt (Te, Ts) des Verifizierens von mit den Knoten assoziierten Ausführungsgrafiken von Zeitrahmen, die eine normale Ausführung der Aufgabe anhand des Wertes der Zeitbasis Tc repräsentieren, um die zeitliche Positionierung der verschiedenen Ausführungszustände der wenigstens einen Aufgabe im Laufe der Ausführung zu verifizieren, durch Verifizieren der Einhaltung dieser Zeitrahmen anhand der empfangenen Meldungen (203), die anzeigen, dass ein Übergang stattgefunden hat, wobei der Zeitpunkt des Übergangs der Wert der Zeitbasis Tc im Moment des Empfangs der Meldung ist, wobei dieser Übergangszeitpunkt mit den Zeitrahmen verglichen wird.

17. Informatikprogramm, gespeichert auf einem computerlesbaren Medium, das Mittel zum Bewirken umfasst, dass eine programmierbare Schaltung das Verfahren nach Anspruch 16 durchführt.

## Claims

1. Circuit (200, 601, 701) for verification of the time progression of the execution of at least one task by an execution unit (201, 600, 700) which functions at the rhythm of a synchronisation signal and which is independent of the circuit, the normal execution of the at least one task being described by an execution graph (101) which comprises nodes (102) which represent the states of execution of the task and transition arcs (103),
the verification circuit comprising a mechanism which keeps updated a time base Tc which acts as a reference for the time verification, this base Tc being updated using a signal TRIG, the signal TRIG being representative of the rhythm of the synchronisation signal, the circuit further comprising a mechanism (300) which verifies that the path in the graph resulting from the execution of at least one task is valid, an error message being generated if this is not the case; and wherein expiry times (Te, Ts) are associated with the nodes of the execution graphs in order to verify the positioning in time of the different states of execution of the at least one task which is being executed, the circuit verifying that these expiry times have been complied with using messages received (203) indicating that a transition has taken place, the transition time being the value of the time base Tc at the time at which the message is received, this transition time being compared with the expiry times.

2. Circuit according to claim 1, wherein the signal TRIG is present at the input of the circuit (200, 601, 701).

3. Circuit according to claim 1, wherein the graph (101) or a pointer towards the graph is stored in at least one internal register (705) when the task with which it is associated is being executed.

4. Circuit according to any one of the preceding claims, wherein a mechanism (303) verifies that the duration of execution of the current state of the at least one task does not exceed a maximum time Dmax which has been allocated to it.

5. Circuit according to claim 4, wherein the budget Dmax is calculated offline during the configuration of the application by applying an algorithm for calculating the worst case execution time WCET.

6. Circuit according to claim 4, comprising auto-calibration means which are capable of determining time constraints associated for each state with the graph of the task thereof and stored (702) in conjunction with the graph.

7. Circuit according to any one of the preceding claims, wherein a mechanism (303) verifies that the duration of execution of the at least one task does not exceed a maximum time which has been allocated to it.

8. Circuit according to any one of the preceding claims, wherein the signal TRIG is the same signal as the synchronisation signal of the execution unit.

9. Circuit according to any one of the preceding claims, wherein a storage unit (703) stores the state during the application carried out by the execution unit (700).

10. Verification system for the execution of at least one task comprising the execution unit (201, 600, 700) and the circuit for verification of the time progression of the execution of at least one task by the execution unit (201, 600, 700) according to any one of the preceding claims and a memory (602, 702) which contains all the execution graphs associated with the tasks which the execution unit (201, 600, 700) can carry out.

11. System according to claim 10, wherein the verification circuit of the time progression of the execution of at least one task by the execution unit (201, 600, 700) and the memory (602, 702) are implemented in the same circuit.

12. System according to any one of claims 10 to 11, wherein the graphs are stored in matrix form.

13. System according to any one of claims 10 to 12, wherein the graphs are stored in the form of a list of transitions which are accessible from a state.

14. System according to any one of claims 10 to 13, wherein time data representative of the execution of a task are encoded in a message (707) which originates from the execution unit (700) and which indicates a change of state.

15. System according to claim 13, wherein the execution time data are protected by a signature so that a corruption of the message can be detected by the graph verification circuit (701).

16. Method for verification of the execution of at least one task by an execution unit (201, 600, 700) which functions at the rhythm of a synchronisation signal, comprising:
- a step of updating a time base Tc using a signal TRIG representative of the rhythm of the synchronisation signal;
- a step (300) of verification that the path in the graph resulting from the execution of at least one task is valid, an error message being generated if this is not the case; and
- a step of verification of expiry times (Te, Ts) associated with the nodes of execution graphs which are representative of a normal execution of the task using the value of the time base Tc, in order to verify the positioning in time of the different execution states of the at least one task being executed, verifying that these expiry times have been complied with using messages received (203) indicating that a transition has taken place, the transition time being the value of the time base Tc at the time at which the message is received, this transition time being compared with the expiry times.

17. Computer program stored on a computer-readable medium which comprises means for causing a programmable circuit to implement the method according to claim 16.
